# EUROPEAN PATENT APPLICATION

(11) **EP 4 793 880 A1**
(43) Date of publication of application: **19.08.2026**
(21) Application number: 25223255.8
(22) Date of filing: 15.12.2025
(51) Int. Cl.: G06T 5/60, G06T 3/40, G06T 7/40, G06T 11/10

(54) **SEMANTIC KNOWLEDGE-BASED TEXTURE PREDICTION FOR ENHANCED IMAGE RESTORATION**

(30) Priority: 18.02.2025 US 202519056434
(71) Applicant: INTEL Corporation, Santa Clara, CA 95054 (US)
(72) Inventor: BARBER, Dor, 4632821 Herzliya (IL); MATICHIN, Hava, 4906445 Petah Tikva (IL); COHEN, Uzi, 4906902 Petah Tikva (IL); HADAR, Mor, 5557218 Kiryt Ono (IL); ZATZARINNI, Rony, 6382619 Tel Aviv (IL)
(74) Representative: HGF

(57) **Abstract**

Systems and methods for determining a texture map for a high resolution image based on a downscaled low resolution version of the image. A texture map is used in image signal processing and image restoration systems to provide a location-specific indication of whether a particular area of an image includes high texture, low texture, edges, or flat regions. Using a low resolution version of the image, semantic cues are integrated with texture information to enable efficient, accurate, and cost-effective texture predictions and generate a texture classification map. The texture classification map based on the low resolution image is upscaled to a high resolution texture classification map. The texture classification map information can then be used to determine a selected filter to apply to each pixel and/or area in the high resolution image. The system provides spatially consistent decisions and improved noise robustness in texture to facilitate accurate image restoration.

## Description

### Technical Field

This disclosure relates generally to image restoration, and in particular to semantic knowledgebased texture prediction on low resolution images for enhanced image restoration.

### Background

Image restoration is a type of image processing that aims to mitigate image degradation that occurs during image acquisition. In general, image restoration attempts to derive a high-quality image from degraded image data, wherein the image data may be corrupted by noise, blur, and other factors. Some techniques for image restoration include denoising, deblurring, sharpening, and super-resolution.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 is a block diagram of an example image processing system, in accordance with various embodiments.
FIG. 2 is a block diagram of a downscaling and simple processing module, in accordance with various embodiments.
FIG. 3 is a block diagram of a texture estimation neural network, in accordance with various embodiments.
FIG. 4 is a block diagram illustrating a ground truth generation process, in accordance with various embodiments.
FIGS. 5A-5D illustrate example images from processing stages, in accordance with various embodiments.
FIGS. 6A and 6B are histograms of texture metrics, calculated for two different segments from an image, in accordance with various embodiments.
FIG. 7 illustrates a spatial denoise block architecture 700, in accordance with various embodiments.
FIG. 8 is a diagram illustrating calculate weights block, in accordance with various embodiments.
FIG. 9 illustrates an architecture for a calculate measures block, in accordance with various embodiments.
FIG. 10 illustrates a sharpening block, in accordance with various embodiments.
FIG. 11 is a flowchart showing a method for texture estimation, in accordance with various embodiments.
FIG. 12 is a block diagram of an example DNN system, in accordance with various embodiments.
FIG. 13 illustrates an example DNN, in accordance with various embodiments
FIG. 14 is a block diagram of an example computing device, in accordance with various embodiments.

### Detailed Description

### Overview

One component of many image processing systems, including image restoration systems, is determination of a texture map. A texture map provides a location-specific indication of whether a particular area of an image includes high texture, low texture, edges, or flat regions. The texture map information can be used to determine a selected filter to apply to each pixel and/or area in the image. For example, in denoising applications, a flat area can be averaged to reduce noise, while a more complex filter may be applied to an area with texture to preserve the textural details.

The computation of an accurate texture map typically utilizes significant computational power, because a large receptive field (RF) is used to fully comprehend the pixel's environment and make consistent decisions. Determining an accurate texture map is even more difficult and computationally expensive in the presence of noise and degradation. The large RF used for the determination of the texture map uses large memory buffers in an image processing hardware that processes the pixel stream line-by-line. The large memory buffers translate into increased hardware area on the chip, subsequently increasing the cost of the chip.

According to various techniques, semantic knowledge can serve as prior information for making consistent decisions in texture estimation. There is a strong correlation between semantic objects and their expected texture levels. For instance, naturally flat objects such as skies and walls typically exhibit low texture levels, while objects like foliage and human hair are usually associated with high texture levels. Understanding the semantics within an image can aid in accurately distinguishing between the actual texture of image regions and noise as well as other forms of degradation. However, semantic estimations generally also utlize a large receptive field (RF) to identify semantic objects, because utilizing a limited RF may lead to inconsistent decisions. For instance, in an area with texture and high noise, both textured and smooth areas might be observed, and texture can be incorrectly identified as noise. Alternatively, in a flat region, noise might be mistakenly detected as texture.

Various techniques have been used to address the problem of texture prediction in the context of image restoration applications. One technique includes using a small receptive field. Systems that use a small receptive field use small receptive field kernels for computing texture metrics. While this approach can be computationally efficient, it is often unable to capture larger patterns and structures, leading to less accurate texture predictions. Systems that use a small receptive field can be particularly inaccurate in texture prediction for complex and/or highly textured images. For example, in images including grass, while the goal is to get a constant texture value over the grass, using the small receptive field, inconsistency of the texture maps is seen due to the large grass structures. Additionally, systems that use a small receptive field can introduce artifacts, leading to unnatural results that can degrade the quality of the restored image. Thus, texture map metric results may not be consistent as texture mapping is limited to a narrow region, and there is no robustness to high noise levels.

Another technique used to address the issue of texture prediction includes using a large receptive field for computing texture metrics. In particular, larger filter kernels and/or multiscale processing can be used to analyze the large receptive field. While this approach leads to more spatially consistent texture estimations, it has significantly increased computational usage, making it inefficient for real-time or resource-limited applications. The increased computational usage can also lead to increased hardware costs. Additionally, while the texture estimation performance of large receptive field systems can be high, the systems generally have low robustness to noise.

Another technique used to address the issue of texture prediction includes using a downscaled image. In particular, texture metrics can be determined based on a downscaled version of the image. Because the image is downscaled, when the same filter kernel size is used, a larger portion of the image is included in the receptive field, such that, effectively, a high receptive field is used for the texture metrics, capturing larger patterns and structures. However, this technique results in the loss of fine details used for texture estimation, resulting in less accurate texture predictions, especially for images with intricate textures or fine details. Additionally, texture prediction based on a downscaled image can result in textures with a high frequency (i.e., finely detailed textures) being detected as a flat region.

Other techniques for image restoration do not explicitly use texture maps. For example, image restoration can use supervised learning methods to implicitly learn semantics and/or be content-aware. While supervised learning methods can be powerful, the methods use large amounts of training data and computational resources. This can make the methods impractical for many applications. Furthermore, supervised learning methods may not provide explicit control or interpretability over the texture estimation process, making it difficult to fine-tune the results or understand why the model made certain predictions. Deep learning approaches, while powerful, typically use extensive training data and high processing power, and are therefore generally less accessible for on-the-fly image restoration or for use in devices with limited computational resources and/or processing power.

Many image processing systems do not incorporate semantic knowledge, which can lead to suboptimal restoration results since the context and content of the image are not fully considered. Some techniques have difficulty differentiating between fine textures and noise, resulting in the loss of detail and/or the preservation or noise in the final image (after the image restoration process).

Some techniques use a semantic segmentation map instead of a texture map. Semantic segmentation map methods predict semantic categories within a low resolution image, potentially aiding in the configuration of image restoration algorithms. Semantic segmentation models are trained to recognize and categorize various objects and regions, providing a high-level understanding of image content. However, in real-world applications, the practicality of semantic segmentation is limited by the significant resources used to predict each semantic class. Training and maintaining models for every conceivable element within a scene renders the semantic segmentation map approach less feasible, especially when considering the cost and complexity associated with acquiring sufficient training data for each class. Additionally, semantic categories do not reliably correspond to specific texture levels, for example, different types of cloth may exhibit varied textures despite belonging to the same semantic class.

In general, texture estimation techniques have various limitations, including limitations in computational efficiency, limitations in accuracy of texture prediction, limitations in consistency of the decisions, limitations in the ability to distinguish noise or other degradations from real texture, and limitations in the capacity to utilize semantic knowledge for improved outcomes.

According to various aspects, systems and methods are provided herein for deducing texture metrics from low resolution images. In various embodiments, the systems and methods gain both a large RF and inexpensive computation. The systems and methods provided herein addresses the various challenges and limitations of texture estimation techniques by integrating semantic cues with texture information from low resolution images, enabling efficient, accurate, and cost-effective texture prediction. In particular, systems and methods are provided for enabling spatially consistent decisions and improved noise robustness in texture to facilitate accurate image restoration. The low resolution predictions can control the application of spatially varying configurations for high resolution texture determination.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example Texture Prediction System

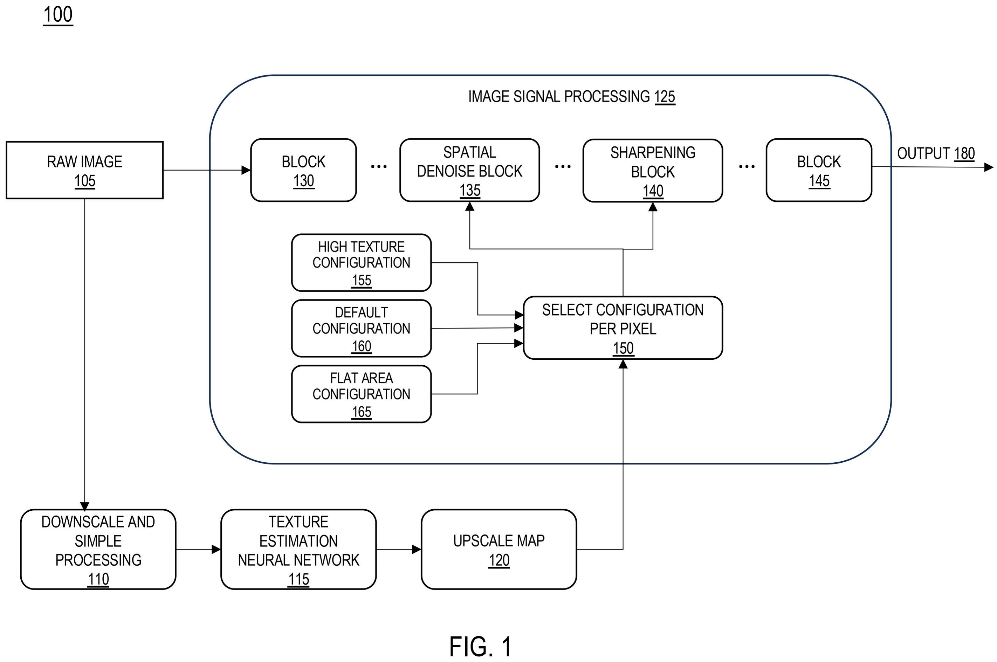

FIG. 1 is a block diagram of a texture prediction system 100 including an image signal processing (ISP) pipeline 125, in accordance with various embodiments. The ISP pipeline 125 includes a spatial denoising block 135 and a sharpening block 140, each of which includes built-in texture estimation for high resolution images. The ISP pipeline 125 receives a raw, unprocessed image 105 from an image sensor. The raw image 105 is also received at a downscaling module 110, which downscales the raw image 105 and performs simple processing on the image, outputting a low resolution image.

The low resolution image from the downscaling module 110 is processed at a texture estimation neural network 115. The texture estimation neural network 115 can be a deep neural network such as a Convolutional Neural Network (CNN), as described in greater detail herein. Based on the low resolution image, the texture estimation neural network 115 predicts the texture of the corresponding high resolution image 105. In particular, the texture estimation neural network 115 can be a CNN-based model that leverages both semantic information and texture information in the low resolution image. Using the semantic and texture information, the texture estimation neural network 115 makes spatially consistent decisions regarding the texture map. In some embodiments, for each pixel in the low resolution image, the texture estimation neural network 115 predicts if the pixel belongs to a "high texture region", a "flat region", or a "mixed or unknown texture level region" also referred as the "default" class. The output from the texture estimation neural network 115 is a predicted low resolution texture classification map.

The predicted low resolution texture classification map output from the texture estimation neural network 115 is input to an upscale map module 120. The upscale map module 120 upscales the predicted low resolution texture classification map to the high resolution size of the image 105. The upscale map module 120 outputs a high resolution texture classification map to the ISP 125. In some embodiments, the predicted low resolution texture classification map output from the texture estimation neural network 115 is input to the ISP 125, and the predicted low resolution texture classification map is upscaled to the high resolution size of the image 105 as part of the ISP 125.

The high resolution texture classification map indicates the classification of each pixel in the high resolution image, where the classifications may be "high texture region", "flat region", or "mixed or unknown texture level region" as described with respect to the texture estimation neural network 115. The pixel classification can then be used to determine how the respective pixels is processed in the ISP 125. In particular, each of the classification can have a corresponding parameters configuration set. The parameters configuration set corresponding to the pixel classification is the parameters configuration set that is applied to respective pixel in the ISP 125. In some examples, the ISP 125 includes a module that performs high resolution texture map estimations by applying a parameters configuration set to each pixel in the high resolution image.

According to various embodiments, the texture estimation neural network 115 is efficient and cost-effective, since the model operates on smaller, low resolution images, thereby using relatively lower computational power. The use of low resolution images by the texture estimation neural network 115, and subsequent upscaling of the texture classification map, allows for limited system resources to be used when processing the high resolution image. In this manner, the texture prediction system 100 is less expensive and more cost-effective than other systems, while maintaining high-quality texture predictions.

The texture prediction system 100 outputs consistent results and enhanced image restoration. The texture prediction system 100 is not limited to a small receptive field relative to the full image, ensuring unified and consistent texture predictions based on larger receptive fields. This approach aids image restoration in achieving spatially consistent decisions regarding the texture map calculated on the high resolution image. Furthermore, the texture prediction is determined on significantly downscaled images (low resolution images), which enhances the model's robustness to varying noise levels. According to various embodiments, the low resolution images undergo minimal processing before being input into the texture prediction neural network 115, further increasing the ability to distinguish noise from texture. Last, the texture estimation neural network 115 leverages semantic information to enhance the accuracy of the texture map prediction. For instance, semantic objects known to naturally have low texture, such as skies or walls, can be accurately assigned low texture values.

### Example Downscaling and Simple Processing Module

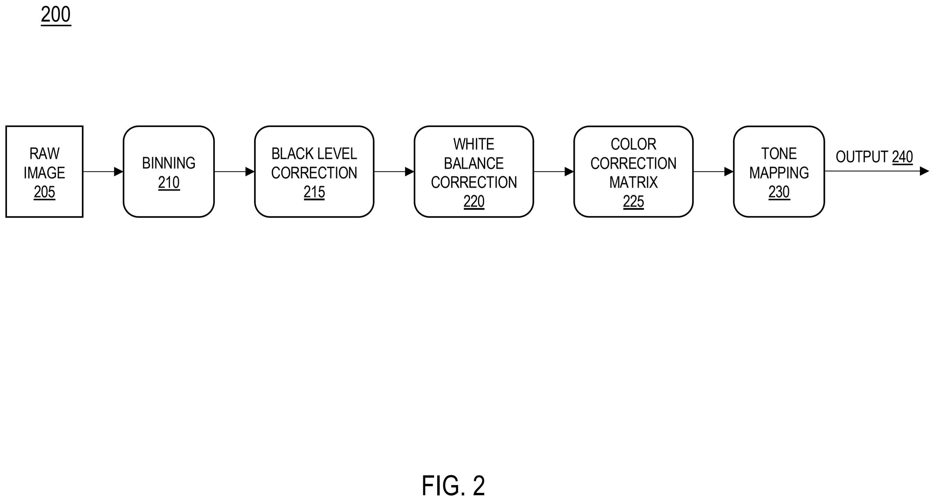

FIG. 2 is a block diagram of a downscaling and simple processing module 200, in accordance with various embodiments. The downscaling and simple processing module 200 includes a binning module 210, a black level correction module 215, a white balance correction module 220, a color correction matrix 225, and a tone mapping module 230. The downscaling module and simple processing module 200 receives as input the raw image 205, which can be the raw unprocessed image from an image sensor. In some examples, the raw image is a Bayer image or an RGB image.

The raw image 205 is received at the binning module 210. The binning module 210 can perform naïve demosaicing as well as a downscaling operation. The downscaling operation reduces the size of the image 205 by grouping the image pixels into blocks of pixels and averaging the pixel values in each block of pixels, thereby effectively reducing the level of detail in the image and increasing the signal to noise ratio. The binning operation generates a low resolution image that retains the overall structure and content of the original image 205, but with less fine detail. In some examples, the low resolution image is an RGB image. In various examples, the binning operation downscales the raw image 205 using a constant integer factor. The integer factor for downscaling the raw image 205 can be a multiple of 2 (e.g., x2, x4, x8, x16). In some examples, the integer factor used for binning and downscaling indicates the number of pixels in the raw image that are grouped together into the blocks of pixels for averaging, to reduce the level of detail in the image and generate the low resolution image.

The low resolution image output from the binning module 210 then undergoes some simple image processing in the downscaling and simple processing module 200. In particular, the low resolution image is input to a black level correction module 215, which adjusts image pixels to correct for black level. The output from the black level correction module 215 is input to a white balance correction module 220, which adjusts the brightness of the image. The output from the white balance correction module 220 is input to a color correction matrix 225 which adjusts overall color balance of the low resolution image. The output from the color correction matrix 225 is input to a tone mapping module 230. The tone mapping module 230 applies a simple tone mapping operator to adjust the color accuracy of the low resolution image. The downscaling and simple processing module 200 outputs a processed low resolution image 240.

### Example Texture Estimation Module

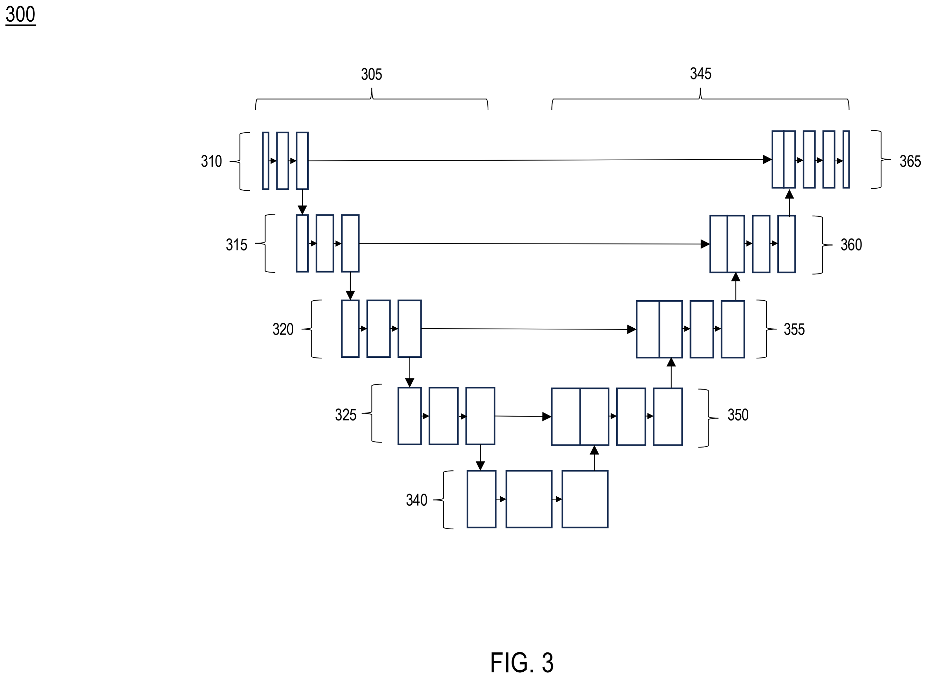

FIG. 3 is a block diagram of a texture estimation neural network 300, in accordance with various embodiments. The texture estimation neural network 300 receives the low resolution image, for example from the downscaling and simple processing module 200. The texture estimation neural network 300 model analyzes the image data, and identifies areas of high, low, or mixed texture levels based on variations in pixel values and semantics. The output is a low resolution texture classification map that provides an estimation of the texture class in the original image (e.g., raw image 105 and/or raw image 205).

The texture estimation neural network 300, as shown in FIG. 3, is a Convolutional Neural Network (CNN), a type of deep learning model. Additionally, the texture estimation neural network 300 as shown in FIG. 3 has a U-Net shaped architecture, including an encoder 305 and a decoder 345. The input to the texture estimation neural network 300 is a downscaled RGB image with three channels, such as the low resolution image generated by the downscaling and simple processing module 200. The resolution of the input image is MxNx3. In various examples, the larger dimension of the image (height or width) is less than or equal to 512. The aspect ratio of the downscaled image is preserved from the original full-size image.

In the encoder 305 stage, the texture estimation neural network 300 includes several layers, grouped in the U-Net architecture into first layers 310, second layers 315, third layers 320, and fourth layers 325, each operating on a different scale (i.e., different spatial dimensions) and designed to extract distinct features from the input image. In various examples, the first layers 310, second layers 315, third layers 320, and fourth layers 325 each include multiple layers, including two convolutional layers and one max pooling layer. In particular, the first two layers in each group operate on a larger spatial dimension, applying a series of filters to the image to detect low-level features like edges and textures. In some examples, the first two layers in each group are 3x3 convolution layers. These layers are followed by max pooling layers, which reduce the data's dimensionality while preserving the most important information and increasing the number of channels. In some examples, the max pooling layers are 2x2 max pooling layers. The increase in the number of channels is designed to incorporate semantic knowledge into the texture estimation process. In some examples, the output from the max pooling layer is received at a next convolutional layer. The output from the max pooling layer can also be connected to a corresponding decoding layer via a skip connect.

The convolution layers and max pooling are repeated four times, in first layers 310, second layers 315, third layers 320, and fourth layers 325, to reach the bottleneck information at the fifth layer 340. In some examples, the fifth layer 340 has the size of M/16 x N/16 x 1024. The fifth layer includes two 3x3 convolutional layers and a 2x2 up-convolution layer, in which a 2x2 up-convolution operator is applied to upscale the feature maps to a higher scale.

In the decoder 345 stage, the texture estimation neural network 300 includes several layers, grouped in the U-Net architecture into fourth layers 350, third layers 355, second layers 360, and first layers 365, each operating on a different scale. At each stage, a 2x2 up-convolution operator is applied to upscale the feature maps to a higher scale. A concatenation operator then combines the matching scale from the corresponding encoder layer, via the skip connect. This is followed by several convolution layers to process the upscaled and concatenated features together. These operations are repeated in the decoder stage until the spatial resolution of the input image is restored. The texture estimation neural network's final layer is a 1x1 convolution layer, which serves as a fully connected layer per pixel, combining the features extracted by the previous layers to make the final texture class predictions.

In particular, the texture estimation neural network 300 classifies each pixel in the low resolution image as belonging to a "high texture region", "flat region", or "mixed or inconclusive texture level region". The classification provides a guide for how each pixel is processed in subsequent processing stages in an ISP, such as the ISP 125. In various embodiments, the texture estimation neural network 300 outputs a low resolution texture classification map based on the predicted classifications of each pixel.

In various implementations, as described, for example, with respect to FIG. 1, the low resolution texture classification map output from the texture estimation neural network 300 is input to an upscale map module. The upscale map module upscales the low resolution texture classification map to the size of the high resolution input image (e.g., image 105 or image 205). In some examples, upscaling is achieved through interpolation. In particular, the texture classes for the additional pixels of the high resolution image are estimated based on the values of the surrounding pixels in the low resolution texture classification map. Any selected interpolation method can be used, such as nearest neighbor interpolation, bilateral upscaling, and/or guided upscaling. In some examples, nearest neighbor interpolation may be used when the upscaling factor is low (e.g., <= x4). In some examples, bilateral upscaling and/or guided upscaling may be used for higher upscaling factors. Following upscaling of the texture classification map, the upscale map module outputs a high resolution texture classification map to an ISP 125 for processing, as described above with respect to FIG. 1.

### Example Training of a Texture Estimation Module

In various embodiments, the texture estimation neural network 300 is trained using a combined loss function that includes both soft Dice Loss and Binary Cross-Entropy (BCE) loss, a methodology frequently employed in image segmentation tasks. The BCE loss quantifies the pixel-wise agreement between the predicted texture maps and the ground truth, whereas the soft Dice loss is instrumental in achieving precise boundary localization. In some embodiments, the texture estimation neural network 300 can incorporate a pre-trained semantic segmentation model with minimal changes to the architecture illustrated in FIG. 3.

The training dataset for the texture estimation neural network (e.g., texture estimation neural network 300) includes a large collection of high-quality, low-noise images. These images are diverse and representative of the variety of scenes, objects, and lighting conditions that the model is likely to encounter in real-world applications. In various implementations, the images can be supplemented with additional images, such as selections from publicly available image datasets. For each image in the training dataset, the ground truth is defined as the optimally calculated texture class for each pixel in the image. The method for automatically generating the ground truth is self-supervised and utilizes a high-quality texture estimation algorithm. The high-quality texture estimation algorithm can accurately capture texture details across a broad spectrum of images. Additionally, the high-quality texture estimation algorithm operates offline with minimal computational constraints, serving as a preprocessing step prior to the training phase.

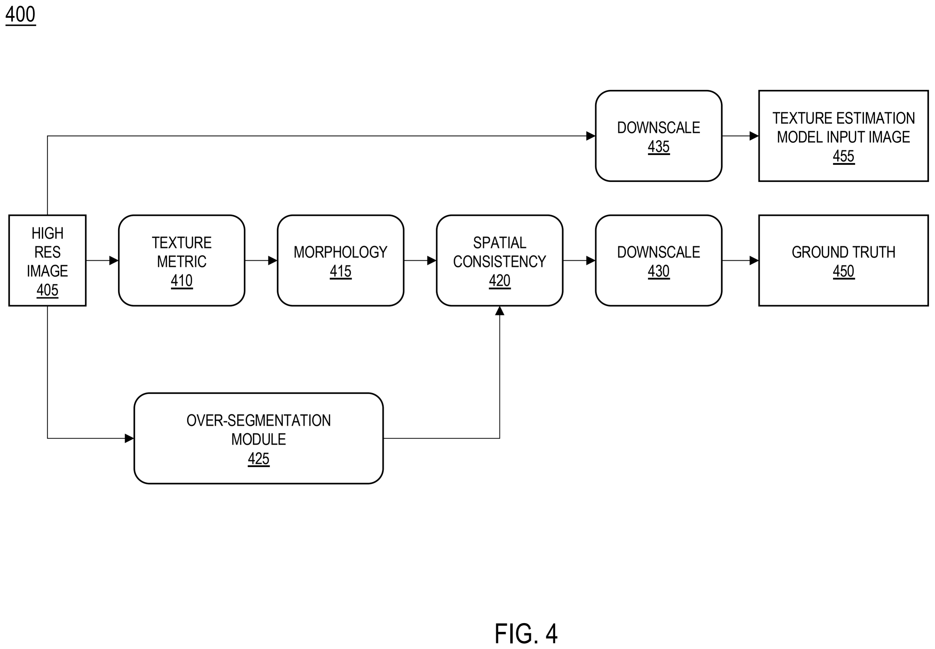

FIG. 4 is a block diagram illustrating a ground truth generation process 400, in accordance with various embodiments. The ground truth generation process 400 begins with a texture metric 410, which can be used for classification of pixels in various texture groups, as described in greater detail below. In some examples, the texture metric 410 is part of the spatial denoise block of an ISP, such as the spatial denoise block 135 of the ISP 125 of FIG. 1. The output from the texture metric 410 can be enhanced with additional post-processing, including processing at a morphology module 415 and a spatial consistency module 420. The output from the spatial consistency module 420 is a spatially consistent texture prediction, which is downscaled at the downscale block 430. In parallel with the downscaling at the downscale block 430, the high resolution image 405 is downscaled at the downscale block 435, to generate a low resolution image that matches the input size used by the texture estimation model.

During the morphology stage, at the morphology module 415, image closing (dilation followed by erosion) and image opening (erosion followed by dilation) operations are applied to the input. In the spatial consistency stage, at the spatial consistency module 420, a foundation model is used to segment the image. In some examples, the foundation model can be a Foundation Vision Model (FVM) or a Vision Foundation Model (VFM). In some examples, a foundation model is a pre-trained deep neural network, which can be used for image segmentation. Additionally, at an over-segmentation module 425, a foundation model can receive the high resolution image 405 in parallel with the texture metric 410 and morphology modules 415, and the foundation model can be used to perform over-segmentation of any uniform texture sub-objects within the high resolution image 405. In particular, the foundation model parameters can be adjusted to over-segment uniform texture sub-objects and output an over-segmentation map to the spatial consistency module 420.

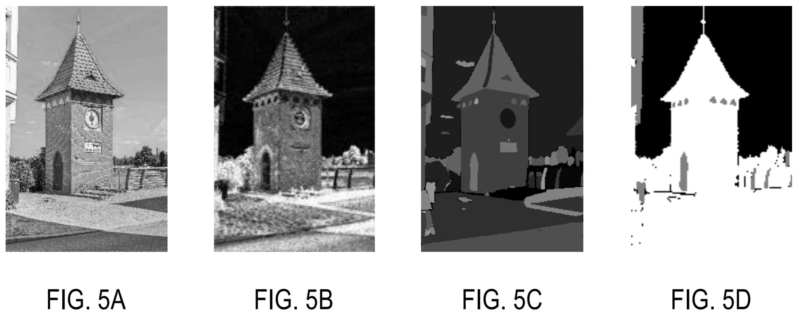

FIGS. 5A-5D illustrate example images from processing stages, in accordance with various embodiments. In particular, FIG. 5A shows an example input image. While the example image in FIG. 5A is a gray-scale image, in various examples, the input image can be a color image, such as an RGB image. FIG. 5B shows a texture metric map of the input image of FIG. 5A. FIG. 5C shows an example of an over-segmentation map. In various examples, the over-segmentation map can be generated using a foundation model. Additionally, in some examples, the over-segmentation map can be a color map. FIG. 5D shows a texture classification map, which can be generated based on the texture metric map and the over-segmentation map. In the texture classification map of FIG. 5D, white indicates high texture regions, black indicates no texture regions, and gray indicates mixed texture regions.

The output from the over-segmentation module 425 is an over-segmentation map that divides the image into clusters or regions. Each region in the over-segmentation map is assigned a single texture class based on its texture level. Examples of texture classes include high texture, low texture, and mixed texture. The classification can be determined using a histogram-based method that aggregates the texture values from the same region to compute the maximum likelihood.

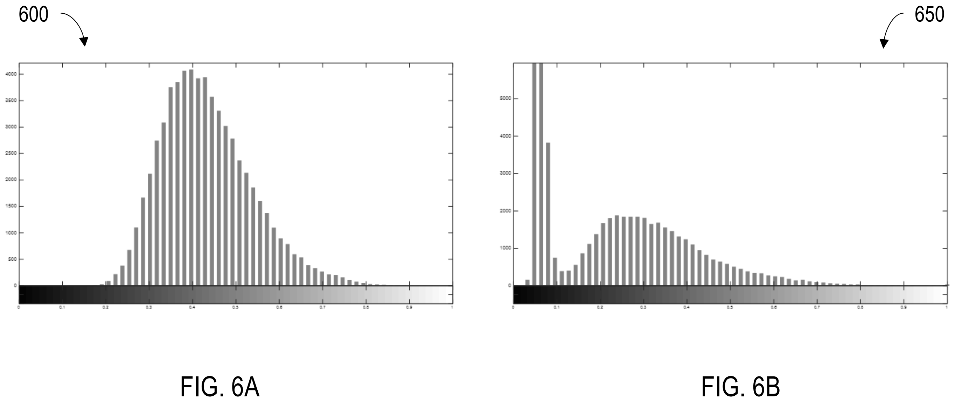

FIGS. 6A and 6B are histograms of texture metrics, calculated for two different segments from an image, in accordance with various embodiments. FIG. 6A shows a histogram 600 of a segment with a relatively uniform texture value. FIG. 6B shows a histogram 650 of a segment with both texture and flat regions, as evidenced by the uneven distribution of values. The segment corresponding to the histogram 650 has a weak maximal likelihood fit, and thus can be categorized as "mixed/inconclusive".

According to various implementations, to enhance the texture estimation neural network's 300 robustness to noise, varying levels of synthetic noise can be added to the input images during training. The noise is added solely to the input images used for training and not during the texture ground truth calculation process.

### Example Image Signal Processing Blocks

As discussed with reference to FIG. 1, a high resolution (upscaled) texture classification map is input to the ISP 125. According to various embodiments, the high resolution texture classification map is used to affect the adjustment of parameters within the ISP blocks for each pixel of the high resolution image. In particular, texture estimation mechanisms within the various ISP blocks are adjusted based on the classification of each pixel (e.g., high texture, flat texture, or mixed texture) as derived from the texture classification map. For example, the classification dictates the selection of parameters for each ISP block, and the selection of parameters affects the texture estimation algorithm's sensitivity to pixel value variations. In particular, the parameters control how the texture estimation algorithm processes the pixel in the high resolution image inside the ISP blocks, effectively guiding the algorithm to favor higher or lower texture values based on the initial estimation from the texture classification map. For regions where the texture prediction is uncertain or classified as mixed, a default configuration can be applied. The default configuration is designed to handle both high and low texture regions effectively, relying on the high resolution texture calculation to make the final determination. By leveraging the initial, coarse texture estimations based on the low resolution image, the ISP blocks are guided towards more accurate and consistent texture predictions for the high resolution image. The coarse texture estimations based on the low resolution image are especially valuable in regions of the image where texture is ambiguous. Texture can be ambiguous due to noise or other degradation, and texture can be challenging to discern from the high resolution data alone due to limited compute and receptive field. Ultimately, using the texture classification map generated based on the low resolution image enhances the accuracy and quality of the final image restoration, ensuring that the high resolution texture estimations align with the overall texture patterns identified in the low resolution image.

One of the ISP blocks that uses the texture information is a spatial denoise block, such as the spatial denoise block 135 in the ISP 125 of FIG. 1. The spatial denoise block can perform a spatial denoise process, such as a main Bayer spatial denoise process.

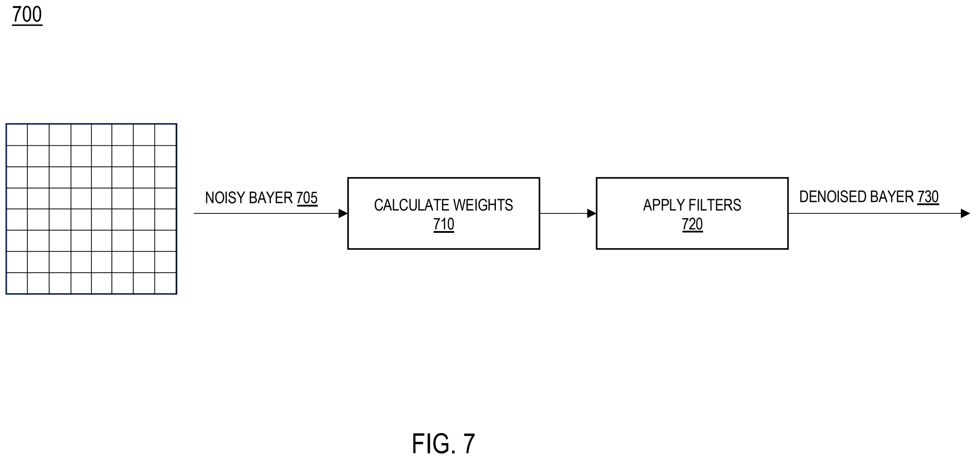

FIG. 7 illustrates a spatial denoise block architecture 700, in accordance with various embodiments. The spatial denoise block architecture receives as input an image, such as a noisy Bayer image 705, and performs a spatial denoise operation. The spatial denoise operation, as illustrated in FIG. 7 includes a calculate weights block 720 and an apply filters block 720. In the apply filters block 720, a 7x7 weighted sum is executed for each pixel of the image to perform spatial denoising. The apply filters block 720 includes at least one filter and the filter's coefficient weights are determined by the calculate weights block 710. For flat areas, a uniform weights filter is utilized. In other example, in flat areas, another option is averaging neighboring pixels. For edges, a directional filter is utilized. The 7x7 window includes pixels of the same color (Gr/Gb/R/B) as the central denoised pixel. Consequently, the actual support used for the filter on the Bayer grid is twice the window size, resulting in a 14x14 area.

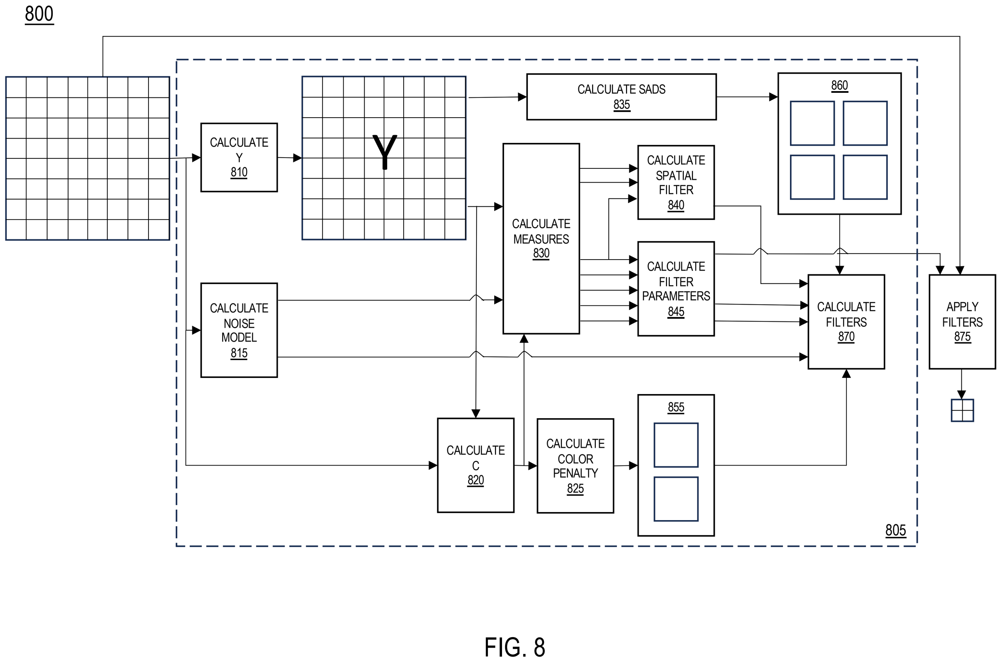

FIG. 8 is a diagram 800 illustrating calculate weights block 805, such as the calculate weights block 720, in accordance with various embodiments. To calculate the filter weights, the calculate weights block 805 first determines a local noise model estimation at a calculate noise model block 815 and determines Y at a calculate Y block 810. In some examples, Y can be a Luma approximation. The calculate C block 820 determines a C value. The calculate measures block 830 receives the local noise model estimation as well as calculations of Y and C, and differentiates between three types of spatial content: texture, edge, and slope. Each content type has its own set of parameters that influence the computation of the denoise filter. The output from the calculate measures block 830 is input to a calculate spatial features block 840 and to a calculate filter parameters block 845.

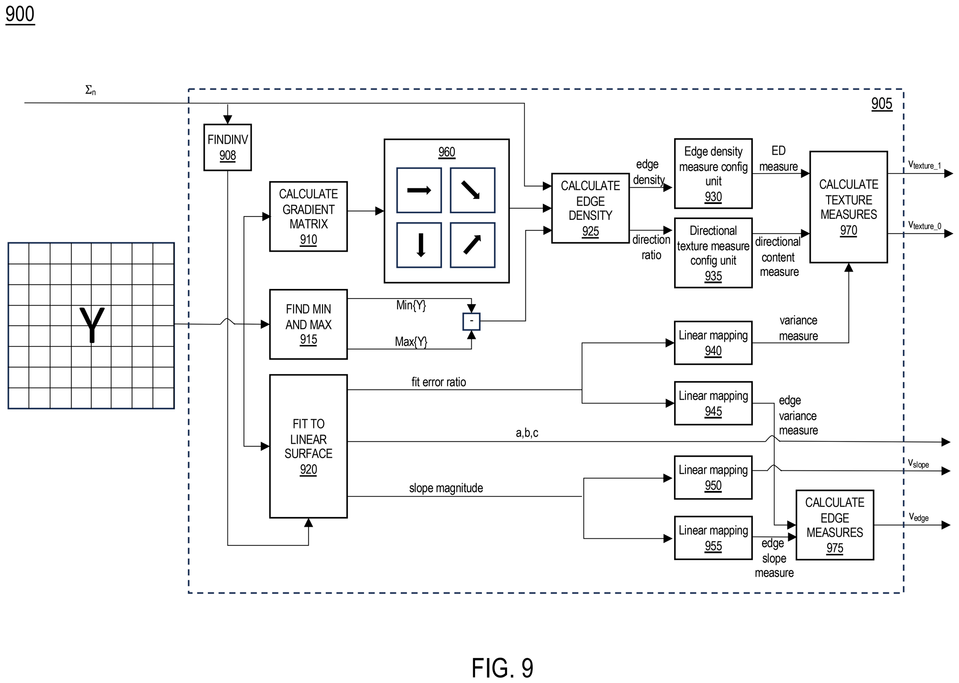

FIG. 9 illustrates an example 900 of an architecture for a calculate measures block 905, such as the calculate measures block 830 of FIG. 8, in accordance with various embodiments. The calculate measure block 905 differentiates between three types of spatial content. In particular, the calculate measures block differentiates among texture, edge, and slope content in the image. As shown in FIG. 9, the input can be a matrix of Y values such as the Y values calculated at the calculate Y block 810 of FIG. 8. The Y values are input to a calculate gradient matrix block 910, a find minimum and maximum block 915 and a fit to linear surface block 920. At block 925, edge density is determined as well as a direction ratio. The edge density is input to an edge density measure configuration unit 930, which outputs an edge measure to a calculate texture measures block 970. The direction ratio is input to a directional texture measure configuration unit 935, which output a direction content measure to the calculate texture measures block 970. The fit to linear surface block 920 outputs a fit error ratio to first 940 and second 945 linear mapping blocks and a slope magnitude to third 950 and fourth 955 linear mapping blocks. The first linear mapping block 940 outputs a variance measure to the calculate texture measures block 970. The second linear mapping block 945 output an edge variance measure to a calculate edge measures block 975. The fourth linear mapping block 955 outputs an edge slope measure to the calculate edge measures block 975.

On the targeted platform, the parameters and thresholds used to distinguish between the different content measurements can be locally adjusted. The mechanism's objective is to configure the parameters to achieve a more uniform and accurate measurement, even amidst high noise levels. If the downscaled image metric indicates mixed or inconclusive texture class, the default parameters of the calculate measures block 905 will be employed, relying more on the local calculations within the calculate measures block 905. In general, the block's calculations are not replaced by the information from the texture classification map, but the inner block measurements are refined for more robust and uniform results.

Another one of the ISP blocks that uses the texture information is the sharpening block, such as the sharpening block 140 in the ISP 125 of FIG. 1.

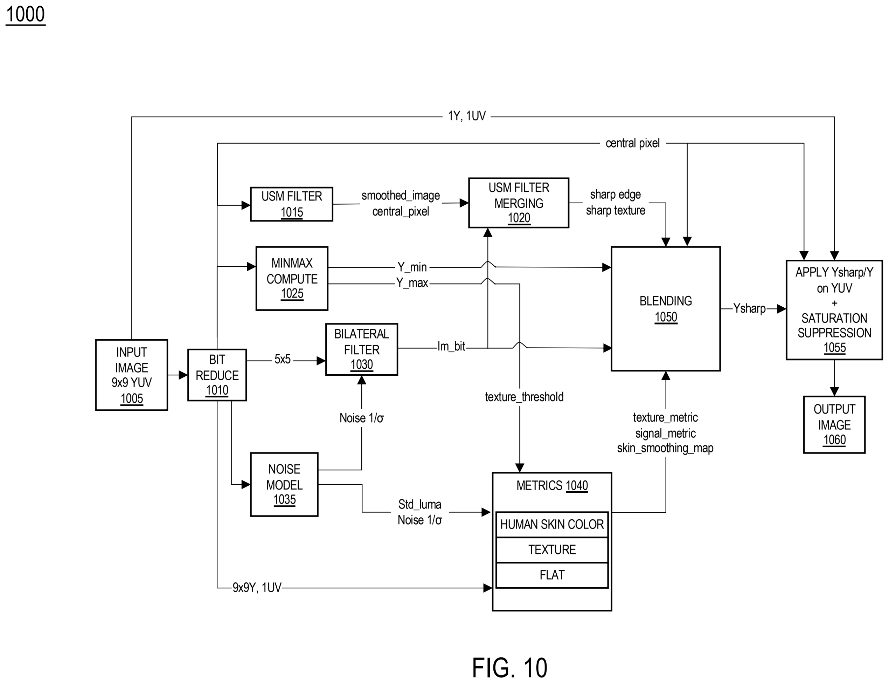

FIG. 10 illustrates a sharpening block 1000, in accordance with various embodiments. The sharpening block 1000 receives an input image 1005, which can be a 9x9 YUV input image. The sharpening block 1000 outputs texture and signal metrics. The sharpening block 1000 distinguishes flat areas in which no sharpening will be used. The sharpening block 1000 also distinguishes between areas of texture and edges. In some examples, for regions of an image that have texture, overshoot and undershoot in image processing can be advantageous and purposefully included. However, for edge regions of an image, overshoot and undershoot in image processing are avoided. In some examples, the sharpening block 1000 includes a metrics block 1040, which can identify regions with texture, flat regions, and human skin color regions. The metrics block 1040 outputs a texture metric, a signal metric, and a skin smoothing map to a blending block 1050.

In various embodiments, a texture metric can be determined at the sharpening block 1000. For a texture metric calculation, there can be an underlying assumption that textures exhibit gradients in multiple directions. In contrast, edges typically show gradients in a singular direction. Therefore, in some embodiments, for a texture metric determination, the sum of gradients within each 8x8 window is calculated, resulting in four values. The four values can include two values for vertical texture metrics and two values for horizontal texture metrics. Each value can have a corresponding polarity. The gradient summation that results in the four values can be thresholded by locally adaptive parameters. By applying a spatially varying configuration, as discussed herein, the gradient threshold can be regulated by the texture class estimation mechanism.

The signal metric compute value can be used to detect image regions that are flat. The local STD that is normalized by the local noise model estimation can determine the signal metric compute value as well as a threshold value that can be locally altered. In various embodiments, the threshold is locally controlled by the texture class estimation.

According to various implementations, the sharpening strength for areas with edges and textures can be fine-tuned locally based on the texture class estimation, allowing for a more precise application of sharpening. In particular, sharpening can be tailored to the specific characteristics of each image region.

### Example Method for Texture Estimation

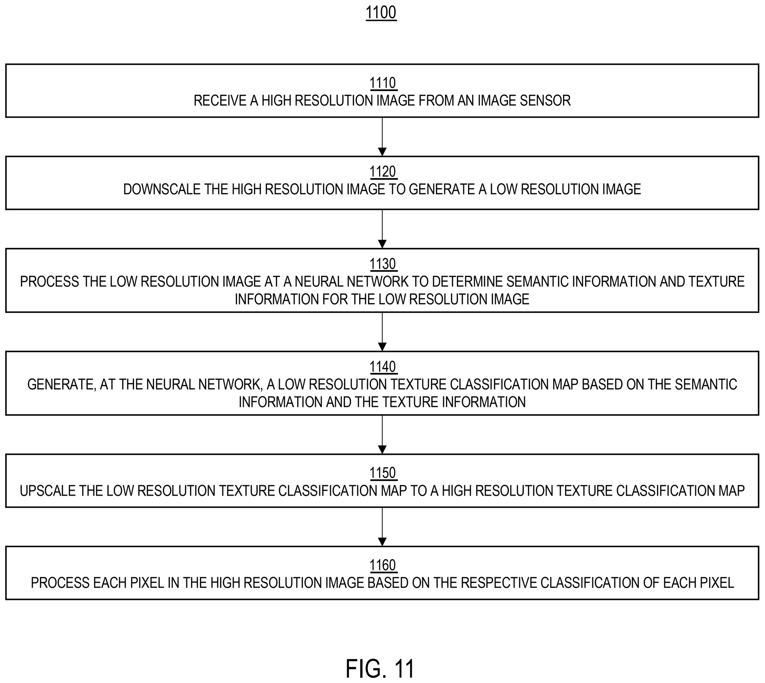

FIG. 11 is a flowchart showing a method 1100 for texture estimation, in accordance with various embodiments. At step 1110, a raw image is received from an image sensor. The raw image is a high resolution image. At step 1120, the raw image is downscaled to generate a low resolution image. In various embodiments, the raw image can be downscaled at a downscale and simple processing module such as the downscale and simple processing module described with respect to FIG. 2. In various examples, the raw image can be downscaled using binning.

At step 1130, the low resolution image is processed at a neural network to determine semantic information and texture information for the low resolution image. The neural network can be a CNN such as the texture estimation neural network 300 described with respect to FIG. 3. At step 1140, a low resolution texture classification map is generated at the neural network, based on the semantic information and the texture information. In particular, the neural network predicts a texture class for each pixel in the low resolution image to generate the low resolution texture classification map.

At step 1150, the low resolution texture classification map is upscaled to a high resolution texture classification map, wherein the high resolution texture classification map indicates a classification of each pixel in the high resolution image. In some embodiments, an upscale map module such as the upscale map module 120 of FIG. 1 can be used to upscale the low resolution texture classification map.

At step 1160, each pixel of the high resolution image is processed based on the respective classification. In particular, the high resolution texture classification map is input to an ISP, such as the ISP 125, and image processing blocks can use the texture classification in processing corresponding pixels of the high resolution image.

### Example DNN

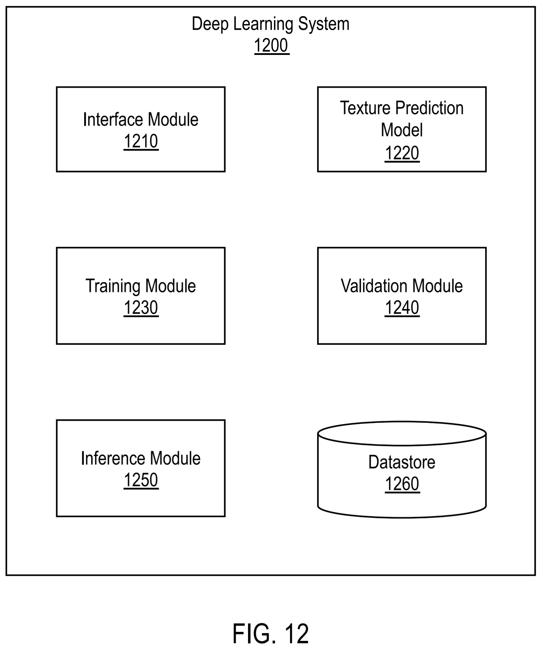

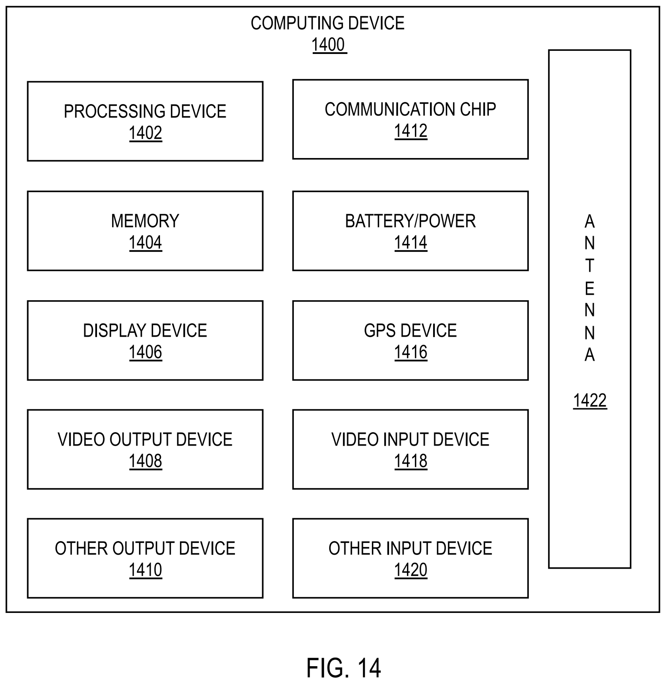

FIG. 12 is a block diagram of an example DNN system 1200, in accordance with various embodiments. The DNN system 1200 trains DNNs for various tasks, including texture estimation for images. The DNN system 1200 includes an interface module 1210, a texture prediction model 1220, a training module 1230, a validation module 1240, an inference module 1250, and a datastore 1260. In other embodiments, alternative configurations, different or additional components may be included in the DNN system 1200. Further, functionality attributed to a component of the DNN system 1200 may be accomplished by a different component included in the DNN system 1200 or a different system. The DNN system 1200 or a component of the DNN system 1200 (e.g., the training module 1230 or inference module 1250) may include the computing device 1400 in FIG. 14.

The interface module 1210 facilitates communications of the DNN system 1200 with other systems. As an example, the interface module 1210 supports the DNN system 1200 to distribute trained DNNs to other systems, e.g., computing devices configured to apply DNNs to perform tasks. As another example, the interface module 1210 establishes communications between the DNN system 1200 with an external database to receive data that can be used to train DNNs or input into DNNs to perform tasks. In some embodiments, data received by the interface module 1210 may have a data structure, such as a matrix. In some embodiments, data received by the interface module 1210 may be an image, a series of images, and/or a video stream.

The texture prediction model 1220 predicts texture of pixels in images. In some examples, the texture prediction model 1220 performs texture prediction on low resolution images. In general, the texture prediction model includes an encoder and a decoder. The texture prediction model receives downscaled image data (i.e., a low resolution version of the input image), and generates an estimated texture classification map including a predicted texture class for each pixel of the image. During training, the texture prediction model 1220 can use ground truth texture prediction maps.

The training module 1230 trains DNNs by using training datasets. In some embodiments, a training dataset for training a DNN may include one or more images and/or videos, each of which may be a training sample. In some examples, the training module 1230 trains the texture prediction model 1220. The training module 1230 may receive real-world image data for processing with the texture prediction model 1220 as described herein. In some embodiments, the training module 1230 may input different data into different layers of the DNN. For every subsequent DNN layer, the input data may be less than the previous DNN layer. In some examples, the texture prediction model 1220 can be trained with ground truth texture classification maps of images. In some examples, the difference between texture prediction model 1220 texture classification map output and the corresponding groundtruth texture classification map can be measured as the number of pixels in the corresponding maps that have different classifications from each other.

In some embodiments, a part of the training dataset may be used to initially train the DNN, and the rest of the training dataset may be held back as a validation subset used by the validation module 1240 to validate performance of a trained DNN. The portion of the training dataset not including the tuning subset and the validation subset may be used to train the DNN.

The training module 1230 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 1230 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include three channels). A pooling layer is used to reduce the spatial volume of input image after convolution. It is used between two convolution layers. A fully connected layer involves weights, biases, and neurons. It connects neurons in one layer to neurons in another layer. It is used to classify images between different categories by training.

In the process of defining the architecture of the DNN, the training module 1230 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 1230 defines the architecture of the DNN, the training module 1230 inputs a training dataset into the DNN. The training dataset includes a plurality of training samples. An example of a training dataset includes a series of images of a video stream. Unlabeled, real-world video is input to the texture prediction model, and processed using the texture prediction model parameters of the DNN to produce two different model-generated outputs: a first time-forward model-generated output and a second time-reversed model-generated output. In the backward pass, the training module 1230 modifies the parameters inside the DNN ("internal parameters of the DNN") to minimize the differences between the first model-generated output is and the second model-generated output. The internal parameters include weights of filters in the convolutional layers of the DNN. In some embodiments, the training module 1230 uses a cost function to minimize the differences.

The training module 1230 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 1230 finishes the predetermined number of epochs, the training module 1230 may stop updating the parameters in the DNN. The DNN having the updated parameters is referred to as a trained DNN.

The validation module 1240 verifies accuracy of trained DNNs. In some embodiments, the validation module 1240 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 1240 may determine an accuracy score measuring the precision, recall, or a combination of precision and recall of the DNN. The validation module 1240 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 1240 may compare the accuracy score with a threshold score. In an example where the validation module 1240 determines that the accuracy score of the augmented model is lower than the threshold score, the validation module 1240 instructs the training module 1230 to re-train the DNN. In one embodiment, the training module 1230 may iteratively re-train the DNN until the occurrence of a stopping condition, such as the accuracy measurement indication that the DNN may be sufficiently accurate, or a number of training rounds having taken place.

The inference module 1250 applies the trained or validated DNN to perform tasks. The inference module 1250 may run inference processes of a trained or validated DNN. In some examples, inference makes use of the forward pass to produce model-generated output for unlabeled real-world data. For instance, the inference module 1250 may input real-world data into the DNN and receive an output of the DNN. The output of the DNN may provide a solution to the task for which the DNN is trained for.

The inference module 1250 may aggregate the outputs of the DNN to generate a final result of the inference process. In some embodiments, the inference module 1250 may distribute the DNN to other systems, e.g., computing devices in communication with the DNN system 1200, for the other systems to apply the DNN to perform the tasks. The distribution of the DNN may be done through the interface module 1210. In some embodiments, the DNN system 1200 may be implemented in a server, such as a cloud server, an edge service, and so on. The computing devices may be connected to the DNN system 1200 through a network. Examples of the computing devices include edge devices.

The datastore 1260 stores data received, generated, used, or otherwise associated with the DNN system 1200. For example, the datastore 1260 stores video processed by the texture prediction model 1220 or used by the training module 1230, validation module 1240, and the inference module 1250. The datastore 1260 may also store other data generated by the training module 1230 and validation module 1240, such as the hyperparameters for training DNNs, internal parameters of trained DNNs (e.g., values of tunable parameters of activation functions, such as Fractional Adaptive Linear Units (FALUs)), etc. In the embodiment of FIG. 12, the datastore 1260 is a component of the DNN system 1200. In other embodiments, the datastore 1260 may be external to the DNN system 1200 and communicate with the DNN system 1200 through a network.

In general, an uncalibrated or badly calibrated texture prediction model would fail to discriminate between similar and dissimilar regions in the frames of the current input and the previous output. Similarly, an uncalibrated or badly calibrated texture prediction model would fail to discriminate between similar and dissimilar regions in the frames of FIGS. 4A and 4B. When a moving object is blended with the background, a ghost artifact appears in the output frame (i.e., in the output video). In particular, a ghost artifact appears when pixels of the moving foreground object are blended with the background pixels, making the moving object appear transparent. When the current input is blended with the previous output, the ghost artifact trails behind the moving object.

For texture prediction model training, the input can include an input image frame and a labeled groundtruth texture prediction model-processed image. In various examples, the input image frame is received at a temporal noise reducer such as the texture prediction model of image processing systems 100, 200, or the texture prediction model 1220. In other examples, the input image frame can be received at the training module 1230 or the inference module 1250 of FIG. 12. The imager can be a camera, such as a video camera. The input image frame can be a still image from the video camera feed. The input image frame can include a matrix of pixels, each pixel having a color, lightness, and/or other parameter. The input image frame can be downscaled and processed by the motion analysis block, and the input image frame can be simultaneously processed (in parallel) by an image processing pipe. The output from the motion analysis block and the output from the image processing pipe can be input to a blending module, which can also retrieve previous output image from a memory. The blending module can remove noise from the processed input image and generate a clean output image. Temporal noise reduction parameters, such as blend factors, are adjusted to minimize a loss function between the clean output image and the labeled groundtruth texture prediction model-processed image. Various steps can be repeated to further adjust the texture prediction model parameters. In some examples, the training can be repeated with a new input image frame and groundtruth texture prediction model-processed image. In some examples, the motion analysis block can be trained using downscaled input images and comparing motion analysis block motion map outputs to groundtruth motion maps. Similarly, in some examples, the blending module can be trained using processed texture prediction model input images and downscaled motion maps, and comparing blending module clean processed output images to groundtruth clean processed output images.

### Example CNN System for Texture Estimation

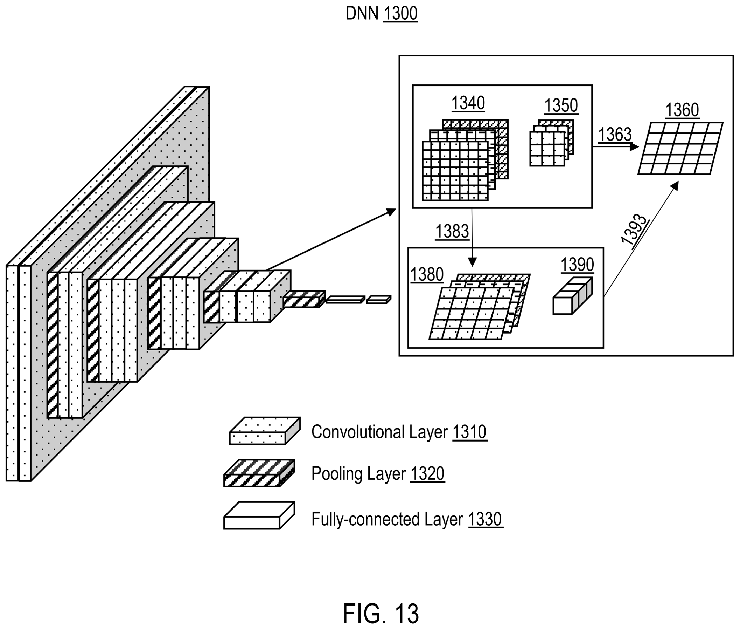

FIG. 13 illustrates an example DNN 1300, in accordance with various embodiments. For purpose of illustration, the DNN 1300 in FIG. 13 is a CNN. In other embodiments, the DNN 1300 may be other types of DNNs. The DNN 1300 is trained to receive images and output classifications of objects in the images. In the embodiments of FIG. 13, the DNN 1300 receives an input image 1305 that includes objects. The DNN 1300 includes a sequence of layers comprising a plurality of convolutional layers 1310 (individually referred to as "convolutional layer 1310"), a plurality of pooling layers 1320 (individually referred to as "pooling layer 1320"), and a plurality of fully connected layers 1330 (individually referred to as "fully connected layer 1330"). In other embodiments, the DNN 1300 may include fewer, more, or different layers. In an inference of the DNN 1300, the layers of the DNN 1300 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 1310 summarize the presence of features in the input image 1305. The convolutional layers 1310 function as feature extractors. The first layer of the DNN 1300 is a convolutional layer 1310. In an example, a convolutional layer 1310 performs a convolution on an input tensor 1340 (also referred to as IFM 1340) and a filter 1350. As shown in FIG. 13, the IFM 1340 is represented by a 7×7×3 three-dimensional (3D) matrix. The IFM 1340 includes 3 input channels, each of which is represented by a 7×7 two-dimensional (2D) matrix. The 7×7 2D matrix includes 7 input elements (also referred to as input points) in each row and seven input elements in each column. The filter 1350 is represented by a 3×3×3 3D matrix. The filter 1350 includes 3 kernels, each of which may correspond to a different input channel of the IFM 1340. A kernel is a 2D matrix of weights, where the weights are arranged in columns and rows. A kernel can be smaller than the IFM. In the embodiments of FIG. 13, each kernel is represented by a 3×3 2D matrix. The 3×3 kernel includes 3 weights in each row and three weights in each column. Weights can be initialized and updated by backpropagation using gradient descent. The magnitudes of the weights can indicate importance of the filter 1350 in extracting features from the IFM 1340.

The convolution includes MAC operations with the input elements in the IFM 1340 and the weights in the filter 1350. The convolution may be a standard convolution 1363 or a depthwise convolution 1383. In the standard convolution 1363, the whole filter 1350 slides across the IFM 1340. All the input channels are combined to produce an output tensor 1360 (also referred to as output feature map (OFM) 1360). The OFM 1360 is represented by a 5×5 2D matrix. The 5×5 2D matrix includes 5 output elements (also referred to as output points) in each row and five output elements in each column. For purpose of illustration, the standard convolution includes one filter in the embodiments of FIG. 13. In embodiments where there are multiple filters, the standard convolution may produce multiple output channels in the OFM 1360.

The multiplication applied between a kernel-sized patch of the IFM 1340 and a kernel may be a dot product. A dot product is the elementwise multiplication between the kernel-sized patch of the IFM 1340 and the corresponding kernel, which is then summed, always resulting in a single value. Because it results in a single value, the operation is often referred to as the "scalar product." Using a kernel smaller than the IFM 1340 is intentional as it allows the same kernel (set of weights) to be multiplied by the IFM 1340 multiple times at different points on the IFM 1340. Specifically, the kernel is applied systematically to each overlapping part or kernel-sized patch of the IFM 1340, left to right, top to bottom. The result from multiplying the kernel with the IFM 1340 one time is a single value. As the kernel is applied multiple times to the IFM 1340, the multiplication result is a 2D matrix of output elements. As such, the 2D output matrix (i.e., the OFM 1360) from the standard convolution 1363 is referred to as an OFM.

In the depthwise convolution 1383, the input channels are not combined. Rather, MAC operations are performed on an individual input channel and an individual kernel and produce an output channel. As shown in FIG. 13, the depthwise convolution 1383 produces a depthwise output tensor 1380. The depthwise output tensor 1380 is represented by a 5×5×3 3D matrix. The depthwise output tensor 1380 includes 3 output channels, each of which is represented by a 5×5 2D matrix. The 5×5 2D matrix includes 5 output elements in each row and five output elements in each column. Each output channel is a result of MAC operations of an input channel of the IFM 1340 and a kernel of the filter 1350. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 1393 is then performed on the depthwise output tensor 1380 and a 1×1×3 tensor 1390 to produce the OFM 1360.

The OFM 1360 is then passed to the next layer in the sequence. In some embodiments, the OFM 1360 is passed through an activation function. An example activation function is the rectified linear activation function (ReLU). ReLU is a calculation that returns the value provided as input directly, or the value zero if the input is zero or less. The convolutional layer 1310 may receive several images as input and calculate the convolution of each of them with each of the kernels. This process can be repeated several times. For instance, the OFM 1360 is passed to the subsequent convolutional layer 1310 (i.e., the convolutional layer 1310 following the convolutional layer 1310 generating the OFM 1360 in the sequence). The subsequent convolutional layers 1310 perform a convolution on the OFM 1360 with new kernels and generates a new feature map. The new feature map may also be normalized and resized. The new feature map can be kernelled again by a further subsequent convolutional layer 1310, and so on.

In some embodiments, a convolutional layer 1310 has four hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 1310). The convolutional layers 1310 may perform various types of convolutions, such as 2-dimensional convolution, dilated or atrous convolution, spatial separable convolution, depthwise separable convolution, transposed convolution, and so on. The DNN 1300 includes 16 convolutional layers 1310. In other embodiments, the DNN 1300 may include a different number of convolutional layers.

The pooling layers 1320 down-sample feature maps generated by the convolutional layers, e.g., by summarizing the presence of features in the patches of the feature maps. A pooling layer 1320 is placed between two convolution layers 1310: a preceding convolutional layer 1310 (the convolution layer 1310 preceding the pooling layer 1320 in the sequence of layers) and a subsequent convolutional layer 1310 (the convolution layer 1310 subsequent to the pooling layer 1320 in the sequence of layers). In some embodiments, a pooling layer 1320 is added after a convolutional layer 1310, e.g., after an activation function (e.g., ReLU, etc.) has been applied to the OFM 1360.

A pooling layer 1320 receives feature maps generated by the preceding convolution layer 1310 and applies a pooling operation to the feature maps. The pooling operation reduces the size of the feature maps while preserving their important characteristics. Accordingly, the pooling operation improves the efficiency of the DNN and avoids over-learning. The pooling layers 1320 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of two pixels, so that the pooling operation reduces the size of a feature map by a factor of 2, e.g., the number of pixels or values in the feature map is reduced to one quarter the size. In an example, a pooling layer 1320 applied to a feature map of 6×6 results in an output pooled feature map of 3×3. The output of the pooling layer 1320 is inputted into the subsequent convolution layer 1310 for further feature extraction. In some embodiments, the pooling layer 1320 operates upon each feature map separately to create a new set of the same number of pooled feature maps.

The fully connected layers 1330 are the last layers of the DNN. The fully connected layers 1330 may be convolutional or not. The fully connected layers 1330 receive an input operand. The input operand defines the output of the convolutional layers 1310 and pooling layers 1320 and includes the values of the last feature map generated by the last pooling layer 1320 in the sequence. The fully connected layers 1330 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 1330 by using a logistic function (binary classification) or a softmax function (multi-class classification) as an activation function.

In some embodiments, the fully connected layers 1330 classify the input image 1305 and return an operand of size N, where N is the number of classes in the image classification problem. In the embodiments of FIG. 13, N equals 3, as there are three objects 1315, 1325, and 1335 in the input image. Each element of the operand indicates the probability for the input image 1305 to belong to a class. To calculate the probabilities, the fully connected layers 1330 multiply each input element by weight, make the sum, and then apply an activation function (e.g., logistic if N=2, softmax if N>2). This is equivalent to multiplying the input operand by the matrix containing the weights. In an example, the vector includes 3 probabilities: a first probability indicating the object 1315 being a tree, a second probability indicating the object 1325 being a car, and a third probability indicating the object 1335 being a person. In other embodiments where the input image 1305 includes different objects or a different number of objects, the individual values can be different.

### Example Computing Device

FIG. 14 is a block diagram of an example computing device 1400, in accordance with various embodiments. In some embodiments, the computing device 1400 may be used for at least part of the deep learning system 1200 in FIG. 12. A number of components are illustrated in FIG. 14 as included in the computing device 1400, but any one or more of these components may be omitted or duplicated, as suitable for the application. In some embodiments, some or all of the components included in the computing device 1400 may be attached to one or more motherboards. In some embodiments, some or all of these components are fabricated onto a single system on a chip (SoC) die. Additionally, in various embodiments, the computing device 1400 may not include one or more of the components illustrated in FIG. 14, but the computing device 1400 may include interface circuitry for coupling to the one or more components. For example, the computing device 1400 may not include a display device 1406, but may include display device interface circuitry (e.g., a connector and driver circuitry) to which a display device 1406 may be coupled. In another set of examples, the computing device 1400 may not include a video input device 1418 or a video output device 1408, but may include video input or output device interface circuitry (e.g., connectors and supporting circuitry) to which a video input device 1418 or video output device 1408 may be coupled.

The computing device 1400 may include a processing device 1402 (e.g., one or more processing devices). The processing device 1402 processes electronic data from registers and/or memory to transform that electronic data into other electronic data that may be stored in registers and/or memory. The computing device 1400 may include a memory 1404, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1404 may include memory that shares a die with the processing device 1402. In some embodiments, the memory 1404 includes one or more non-transitory computer-readable media storing instructions executable for occupancy mapping or collision detection, e.g., the method 500 described above in conjunction with FIG. 5 or some operations performed by the DNN system 1200 in FIG. 12. The instructions stored in the one or more non-transitory computer-readable media may be executed by the processing device 1402.

In some embodiments, the computing device 1400 may include a communication chip 1412 (e.g., one or more communication chips). For example, the communication chip 1412 may be configured for managing wireless communications for the transfer of data to and from the computing device 1400. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 1412 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1412 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1412 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1412 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1412 may operate in accordance with other wireless protocols in other embodiments. The computing device 1400 may include an antenna 1422 to facilitate wireless communications and/or to receive other wireless communications (such as AM or FM radio transmissions).

In some embodiments, the communication chip 1412 may manage wired communications, such as electrical, optical, or any other suitable communication protocols (e.g., the Ethernet). As noted above, the communication chip 1412 may include multiple communication chips. For instance, a first communication chip 1412 may be dedicated to shorter-range wireless communications such as Wi-Fi or Bluetooth, and a second communication chip 1412 may be dedicated to longer-range wireless communications such as global positioning system (GPS), EDGE, GPRS, CDMA, WiMAX, LTE, EV-DO, or others. In some embodiments, a first communication chip 1412 may be dedicated to wireless communications, and a second communication chip 1412 may be dedicated to wired communications.

The computing device 1400 may include battery/power circuitry 1414. The battery/power circuitry 1414 may include one or more energy storage devices (e.g., batteries or capacitors) and/or circuitry for coupling components of the computing device 1400 to an energy source separate from the computing device 1400 (e.g., AC line power).

The computing device 1400 may include a display device 1406 (or corresponding interface circuitry, as discussed above). The display device 1406 may include any visual indicators, such as a heads-up display, a computer monitor, a projector, a touchscreen display, a liquid crystal display (LCD), a light-emitting diode display, or a flat panel display, for example.

The computing device 1400 may include a video output device 1408 (or corresponding interface circuitry, as discussed above). The video output device 1408 may include any device that generates an audible indicator, such as speakers, headsets, or earbuds, for example.

The computing device 1400 may include a video input device 1418 (or corresponding interface circuitry, as discussed above). The video input device 1418 may include any device that generates a signal representative of a sound, such as microphones, microphone arrays, or digital instruments (e.g., instruments having a musical instrument digital interface (MIDI) output).

The computing device 1400 may include a GPS device 1416 (or corresponding interface circuitry, as discussed above). The GPS device 1416 may be in communication with a satellite-based system and may receive a location of the computing device 1400, as known in the art.

The computing device 1400 may include another output device 1410 (or corresponding interface circuitry, as discussed above). Examples of the other output device 1410 may include a video codec, a video codec, a printer, a wired or wireless transmitter for providing information to other devices, or an additional storage device.

The computing device 1400 may include another input device 1420 (or corresponding interface circuitry, as discussed above). Examples of the other input device 1420 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1400 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1400 may be any other electronic device that processes data.

### Selected Examples

The following paragraphs provide various examples of the embodiments disclosed herein.

Example 1 provides a computer-implemented method, including receiving a raw image from an image sensor, where the raw image is a high resolution image; downscaling the raw image to generate a low resolution image; determining, at a neural network, semantic information and texture information for the low resolution image; generating, at the neural network, based on the semantic information and the texture information, a low resolution texture classification map; upscaling the low resolution texture classification map to a high resolution texture classification map, where the high resolution texture classification map indicates a classification of each pixel in the high resolution image; and processing each pixel of the high resolution image based on the respective classification.

Example 2 provides the computer-implemented method of example 1, where generating the low resolution texture classification map includes predicting, for each pixel in the low resolution image, a texture class.

Example 3 provides the computer-implemented method of example 2, where predicting the texture class includes assigning each pixel in the low resolution image to one of: a first texture class for high texture regions, a second texture class for flat regions, and a third texture class for unknown and/or mixed texture level regions.

Example 4 provides the computer-implemented method according to any of examples 1-3, where the neural network is a convolutional neural network having a U-Net architecture including an encoder and a decoder.

Example 5 provides the computer-implemented method of example 4, where the encoder includes convolutional layers and max pooling layers, and where processing the low resolution image at the neural network includes incorporating semantic knowledge into texture estimation at the max pooling layers.

Example 6 provides the computer-implemented method of examples 4 and/or 5, where the decoder includes up-convolution operations and convolutional layers and where processing the low resolution image at the neural network includes combining extracted features to make texture class predictions.

Example 7 provides the computer-implemented method according to any of examples 1-5, where downscaling the raw image to generate a low resolution image includes a binning operation including grouping image pixels of the raw image into bins of pixels, and, for each bin of pixels, averaging pixel values.

Example 8 provides the computer-implemented method according to any of examples 1-7, further including receiving the high resolution texture classification map at image signal processor, and where processing each pixel of the high resolution image based on the respective classification includes at least one of processing at a spatial denoise block of the image signal processor and processing at a sharpening block of the image signal processor.

Example 9 provides one or more non-transitory computer-readable media storing instructions executable to perform operations, the operations including receiving a raw image from an image sensor, where the raw image is a high resolution image; downscaling the raw image to generate a low resolution image; determining, at a neural network, semantic information and texture information for the low resolution image; generating, at the neural network, based on the semantic information and the texture information, a low resolution texture classification map; upscaling the low resolution texture classification map to a high resolution texture classification map, where the high resolution texture classification map indicates a classification of each pixel in the high resolution image; and processing each pixel of the high resolution image based on the respective classification.

Example 10 provides the one or more non-transitory computer-readable media according to example 9, where generating the low resolution texture classification map includes predicting, for each pixel in the low resolution image, a texture class.

Example 11 provides the one or more non-transitory computer-readable media according to example 10, where predicting the texture class includes assigning each pixel in the low resolution image to one of: a first texture class for high texture regions, a second texture class for flat regions, and a third texture class for unknown and/or mixed texture level regions.

Example 12 provides the one or more non-transitory computer-readable media according to any of examples 9-11, where the neural network is a convolutional neural network having a U-Net architecture including an encoder and a decoder.

Example 13 provides the one or more non-transitory computer-readable media according to example 12, where the encoder includes convolutional layers and max pooling layers, and where processing the low resolution image at the neural network includes incorporating semantic knowledge into texture estimation at the max pooling layers.

Example 14 provides the one or more non-transitory computer-readable media according to any of examples 12-13, where the decoder includes up-convolution operations and convolutional layers and where processing the low resolution image at the neural network includes combining extracted features to make texture class predictions.

Example 15 provides the one or more non-transitory computer-readable media according to any of examples 9-14, where downscaling the raw image to generate a low resolution image includes a binning operation including grouping image pixels of the raw image into bins of pixels, and, for each bin of pixels, averaging pixel values.

Example 16 provides the one or more non-transitory computer-readable media according to any of examples 9-15, the operations further including receiving the high resolution texture classification map at an image signal processor, and where processing each pixel of the high resolution image based on the respective classification includes at least one of processing at a spatial denoise block of the image signal processor and processing at a sharpening block of the image signal processor.

Example 17 provides an apparatus, including a computer processor for executing computer program instructions; and a non-transitory computer-readable memory storing computer program instructions executable by the computer processor to perform operations including receiving a raw image from an image sensor, where the raw image is a high resolution image; downscaling the raw image to generate a low resolution image; determining, at a neural network, semantic information and texture information for the low resolution image; generating, at the neural network, based on the semantic information and the texture information, a low resolution texture classification map; upscaling the low resolution texture classification map to a high resolution texture classification map, where the high resolution texture classification map indicates a classification of each pixel in the high resolution image; and processing each pixel of the high resolution image based on the respective classification.

Example 18 provides the apparatus according to example 17, where generating the low resolution texture classification map includes predicting, for each pixel in the low resolution image, a texture class.

Example 19 provides the apparatus according to example 18, where predicting the texture class includes assigning each pixel in the low resolution image to one of: a first texture class for high texture regions, a second texture class for flat regions, and a third texture class for unknown and/or mixed texture level regions.

Example 20 provides the apparatus according to any of examples 17-19, where the neural network is a convolutional neural network having a U-Net architecture including an encoder and a decoder.

Example 21 provides the apparatus according to example 20, where the encoder includes encoder convolutional layers and max pooling layers, and where processing the low resolution image at the neural network includes incorporating semantic knowledge into texture estimation at the max pooling layers.

Example 22 provides the apparatus according to any of examples 20-21, where the decoder includes up-convolution operations and decoder convolutional layers and where processing the low resolution image at the neural network includes combining extracted features to make texture class predictions.

Example 23 provides the apparatus according to any of examples 17-22, where downscaling the raw image to generate a low resolution image includes a binning operation including grouping image pixels of the raw image into bins of pixels, and, for each bin of pixels, averaging pixel values.

Example 24 provides the apparatus according to any of examples 17-23, the operations further including receiving the high resolution texture classification map at image signal processor, and where processing each pixel of the high resolution image based on the respective classification includes at least one of processing at a spatial denoise block of the image signal processor and processing at a sharpening block of the image signal processor.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A computer-implemented method, comprising:
receiving a raw image from an image sensor, wherein the raw image is a high resolution image;
downscaling the raw image to generate a low resolution image;
determining, at a neural network, semantic information and texture information for the low resolution image;
generating, at the neural network, based on the semantic information and the texture information, a low resolution texture classification map;
upscaling the low resolution texture classification map to a high resolution texture classification map, wherein the high resolution texture classification map indicates a classification of each pixel in the high resolution image; and
processing each pixel of the high resolution image based on the respective classification.

2. The computer-implemented method according to claim 1, wherein generating the low resolution texture classification map includes predicting, for each pixel in the low resolution image, a texture class.

3. The computer-implemented method according to claim 2, wherein predicting the texture class includes assigning each pixel in the low resolution image to one of: a first texture class for high texture regions, a second texture class for flat regions, and a third texture class for unknown and/or mixed texture level regions.

4. The computer-implemented method according to any of claims 1-3, wherein the neural network is a convolutional neural network having a U-Net architecture including an encoder and a decoder.

5. The computer-implemented method according to claim 4, wherein the encoder includes convolutional layers and max pooling layers, and wherein processing the low resolution image at the neural network includes incorporating semantic knowledge into texture estimation at the max pooling layers.

6. The computer-implemented method according to any of claims 4-5, wherein the decoder includes up-convolution operations and convolutional layers and wherein processing the low resolution image at the neural network includes combining extracted features to make texture class predictions.

7. The computer-implemented method according to any of claims 1-6, wherein downscaling the raw image to generate a low resolution image includes a binning operation comprising grouping image pixels of the raw image into bins of pixels, and, for each bin of pixels, averaging pixel values.

8. The computer-implemented method according to any of claims 1-7, further comprising receiving the high resolution texture classification map at image signal processor, and wherein processing each pixel of the high resolution image based on the respective classification includes at least one of processing at a spatial denoise block of the image signal processor and processing at a sharpening block of the image signal processor.

9. One or more non-transitory computer-readable media storing instructions executable to perform operations, the operations comprising:
receiving a raw image from an image sensor, wherein the raw image is a high resolution image;
downscaling the raw image to generate a low resolution image;
determining, at a neural network, semantic information and texture information for the low resolution image;
generating, at the neural network, based on the semantic information and the texture information, a low resolution texture classification map;
upscaling the low resolution texture classification map to a high resolution texture classification map, wherein the high resolution texture classification map indicates a classification of each pixel in the high resolution image; and
processing each pixel of the high resolution image based on the respective classification.

10. The one or more non-transitory computer-readable media according to claim 9, wherein generating the low resolution texture classification map includes predicting, for each pixel in the low resolution image, a texture class.

11. The one or more non-transitory computer-readable media according to claim 10, wherein predicting the texture class includes assigning each pixel in the low resolution image to one of: a first texture class for high texture regions, a second texture class for flat regions, and a third texture class for unknown and/or mixed texture level regions.

12. An apparatus, comprising:
a computer processor for executing computer program instructions; and
a non-transitory computer-readable memory storing computer program instructions executable by the computer processor to perform operations comprising:
receiving a raw image from an image sensor, wherein the raw image is a high resolution image;
downscaling the raw image to generate a low resolution image;
determining, at a neural network, semantic information and texture information for the low resolution image;
generating, at the neural network, based on the semantic information and the texture information, a low resolution texture classification map;
upscaling the low resolution texture classification map to a high resolution texture classification map, wherein the high resolution texture classification map indicates a classification of each pixel in the high resolution image; and
processing each pixel of the high resolution image based on the respective classification.

13. The apparatus according to claim 12, wherein generating the low resolution texture classification map includes predicting, for each pixel in the low resolution image, a texture class.

14. The apparatus according to claim 13, wherein predicting the texture class includes assigning each pixel in the low resolution image to one of: a first texture class for high texture regions, a second texture class for flat regions, and a third texture class for unknown and/or mixed texture level regions.

15. The apparatus according to any of claims 12 to 14, wherein the neural network is a convolutional neural network having a U-Net architecture including an encoder and a decoder, wherein the encoder includes encoder convolutional layers and max pooling layers, and wherein processing the low resolution image at the neural network includes incorporating semantic knowledge into texture estimation at the max pooling layers.
